# EUROPEAN PATENT APPLICATION

(11) **EP 2 015 176 A1**
(43) Date of publication of application: **14.01.2009**
(21) Application number: 07111873.1
(22) Date of filing: 05.07.2007
(51) Int. Cl.: G06F 9/44

(54) **System and method for quick view of application data on a home screen interface triggered by a scroll/focus action**

(71) Applicant: Research In Motion Limited, Waterloo, Ontario N2L 3W8 (CA)
(72) Inventor: May, Darrell, Waterloo Ontario N2V 2K6 (CA); Klassen, Gerhard Dietrich, Waterloo Ontario N2T 1H7 (CA); Bredin, Robert J. T., Guelph Ontario N1H 5X1 (CA); Paas, Julian, Mississauga Ontario L5H 3L2 (CA); Yach, David, Waterloo Ontario N2K 2N1 (CA); Steele, Joel, Richmond Hill Ontario L4S 2R1 (CA); La, Peter, Mississauga Ontario L5A 3A9 (CA)
(74) Representative: Patel, Binesh

(57) **Abstract**

A home screen user interface permits a user to select an application icon to trigger a quick preview of event data maintained by the associated application. The home screen presents a background and a predetermined number of application icons arranged on the home screen to enable viewing of a majority of the background. At least some of the application icons are operable to invoke respective user interfaces for event applications that manage respective data communication, voice communication and calendar events. Upon a user selecting an application icon corresponding to the respective event application, event data is displayed, preferably after a time delay, on a portion of the home screen.

## Description

### FIELD OF THE INVENTION

The present application relates to a home screen user interface for controlling a device and to such a user interface integrating application and system status information (e.g. message, calendar and other event information).

### BACKGROUND OF THE INVENTION

For communication and personal organization needs, individuals often turn to electronic devices such as personal computers and, particularly, handheld electronic devices (e.g. mobile telephones, personal digital assistants (PDAs), etc.). These devices provide data and, optionally, voice communication capabilities as well as calendar and alarm functions to organize appointments and the like and other applications.

Commonly, electronic devices provide a graphical user interface (GUI) comprising a home screen (sometimes a "desktop" on a personal computer) for controlling the operation of the device. From the home screen, a user may invoke user interfaces for applications and/or device functions through user interface components such as sub-screens, menus, etc. Often the user navigates a focus about the home screen to select among the various applications and functions for invocation. Homes screens typically also display brief application and system status information such as battery life, communication network status (e.g. wireless signal strength), time, day and/or date information, and counts of message events (e.g. unread email, SMS, IM, etc).

However, users want home screen interfaces that provide them with more information to facilitate better use of their devices. A counter that indicates to a user that there is unread email is helpful but the user is required to launch an email interface to see whether to open and view the email. Users want to be able to glance at the home screen to quickly check application and system status information using minimal user inputs (e.g. keystrokes, pointing device movements, etc.) to make informed choices whether to navigate further, as applicable, and bring up a specific interface to obtain more information and features. Further, users want to be able to view relevant new application information in a compact manner on the home screen without launching the application, that is, without navigating away from the home screen to the user interface of the particular application. In this manner, while remaining on the home screen, the user can view a preview of new events for certain predetermined applications while still viewing the background or wallpaper present on the home screen.

A solution that addresses one or more of these issues is therefore desired.

### SUMMARY

In accordance with one aspect, in a computing device having applications for managing respective events, there is provided a method for previewing event data on a home screen user interface comprising: displaying a home screen comprising a background and a predetermined number of application icons arranged on the home screen to enable viewing of a majority of the background, at least some of said application icons for invoking respective user interfaces for event applications which manage corresponding events selected from data communication, voice communication and calendar events; and in response to a user selecting a first application icon corresponding to a first event application, displaying event data maintained by the first event application on a portion of the home screen.

According to one aspect, the method further comprises: removing the display of the event data maintained by the first event application in response to one of: the user selecting a second application icon; and following a predetermined time period after the selection of the first application icon.

According to one embodiment, the event data comprises at least one individual event, and the method further comprises providing an event user interface to the user for selecting the individual event and invoking the event application user interface for the individual event.

In accordance with one aspect, there is provided a communication device having a memory for storing applications for managing respective events, the communication device comprising: a communication interface for communicating data and voice communications; and a graphical user interface (GUI) to control the communication device, said GUI configured to: display a home screen comprising a background and a predetermined number of application icons arranged on the home screen to enable viewing of a majority of the background, at least some of said application icons for invoking respective user interfaces for event applications which manage corresponding events selected from data communication, voice communication and calendar events; and in response to a user selecting a first application icon corresponding to a first event application, display event data maintained by the first event application on a portion of the home screen.

In accordance with another aspect, there is provided a computer program product having computer readable code embodied therein, for execution by a processor of a communication device to provide a home screen user interface, the code configuring the communication device to: display a home screen comprising a background and a predetermined number of application icons arranged on the home screen to enable viewing of a majority of the background, at least some of said application icons for invoking respective user interfaces for event applications which manage corresponding events selected from data communication, voice communication and calendar events; and display event data maintained by a respective event application on a portion of the home screen in response to a user selecting an application icon corresponding to the respective event application.

### BRIEF DESCRIPTION OF THE DRAWINGS

In order that the subject matter may be readily understood, embodiments are illustrated by way of examples in the accompanying drawings, in which:

Figures 1A-1C, 2 and 3 are example views of a home screen integrated presentation GUI in accordance with respective embodiments;

Figure 4 is a block diagram of a storage device showing software components in accordance with an embodiment;

Figure 5 is a block diagram showing an example interaction between selected software components of Figure 4 in accordance with an embodiment;

Figure 6 is a block diagram showing an example interaction between selected software components of Figure 4 in accordance with an alternate embodiment;

Figures 7-9 are flowcharts of operations, in accordance with an embodiment, for the integrated presentation of information in a home screen; and

Figure 10 is an example of a handheld device adapted in accordance with an embodiment.

### DETAILED DESCRIPTION

A home screen user interface provides application icons for invoking particular application interfaces. Such applications may provide for data communication, voice communication and calendar functions. One or more of these applications which comprise communication applications (e.g. email message application, phone application, instant messenger application) and organizational applications (e.g. calendar application) are capable of presenting event information for respective communication and organizational events. Thus, based upon user interaction with the respective application icons, recent/unseen individual events for the associated application are displayed. For example, selected respective communication and calendar events (e.g. most recent communication events or upcoming calendar events) may be displayed upon scrolling to, focusing on or selecting an application icon to provide a user with a snapshot or quick view of events for the corresponding application. The home screen may be displayed in accordance with a theme defining display and information attributes. Method, system, computer program product and other aspects will be apparent to those of ordinary skill in the art.

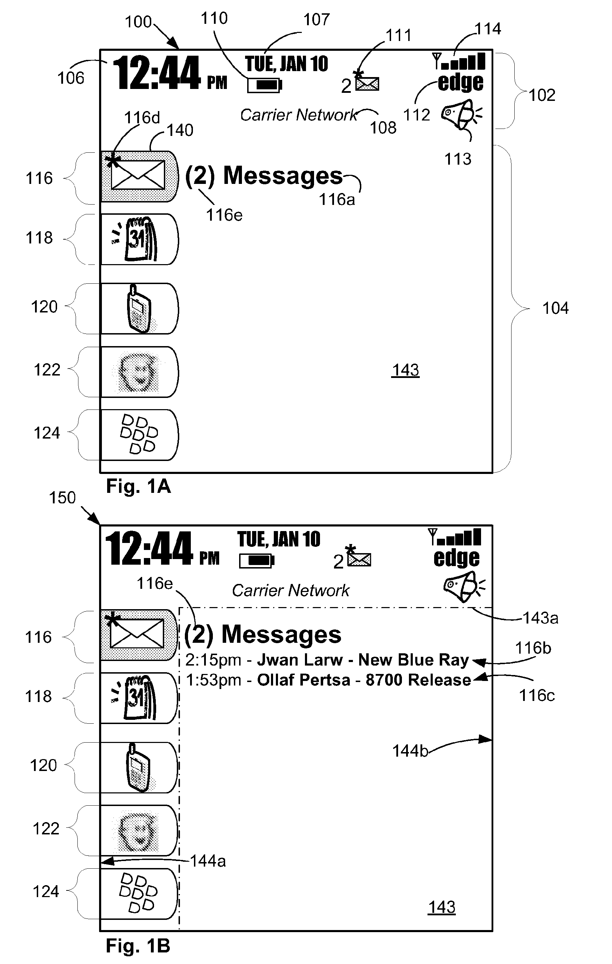

Figures 1A-1C, 2 and 3 are example views of an integrated presentation GUI displaying calendar and other personal organizational events with message events upon user selection of the corresponding application icons in accordance with respective embodiments as described further below.

With reference to Figures 1A-1C, 2 and 3, there are illustrated views 100, 150, 160, 200 and 300 of a home screen providing a list of selected communication and organizational applications capable of presenting information for respective communication and organizational events according to an embodiment. As will be described, the communication events and/or organizational events for corresponding communication and organizational applications are displayed once the respective application icon is selected. Typically, the communication events displayed are those that have occurred most recently while the organizational events displayed are those that are occurring or will next occur in the future.

View 100 comprises two major display portions, namely, upper banner status display portion 102 and primary home screen display portion 104. Upper banner status display portion 102 is configured to present various status information related to the device generally and other applications. The status information of portion 102 comprises day, date 107 and time 106, carrier branding information 108, battery life 110, wireless network name 112, volume control indicator 113 and wireless network signal strength 114. The status information further comprises a banner new message indicator and counter 111 which indicates the presence and number of new messages on the device. Other status information such as other wireless network information, (roaming status, Bluetooth^{®} communications, etc.) communication event counts (e.g. for email, IM, SMS/MMS, WAP, etc. as applicable), alarm, call forward, call timer, etc. may be indicated as is well known to ordinary persons skilled in the art. Status display portion 102 typically does not permit user navigation or interaction with elements of the portion.

Below portion 102 there is the primary home screen display portion 104 configured to present a list of selected communication and organizational applications and optionally, a menu function. Further, the home screen display comprises a wallpaper or background portion 143 for displaying a background image as will be apparent to a person of ordinary skill in the art.

Towards the bottom of the home screen 104 there is displayed the menu icon function 124 which invokes an application list (e.g. a listing of applications) to enable a user to select an application or device feature or to organize and customize the application icons shown on home screen 104.

Referring to Figure 1A, each of the applications invokable via the home screen 104 has an associated application icon for providing a visual identifier for the application that can be selected for invoking the respective operation as will be appreciated by a person skilled in the art. In the present embodiment, there is shown a message application icon 116, a calendar application icon 118, a phone application icon 120, and an IM messenger application icon 122.

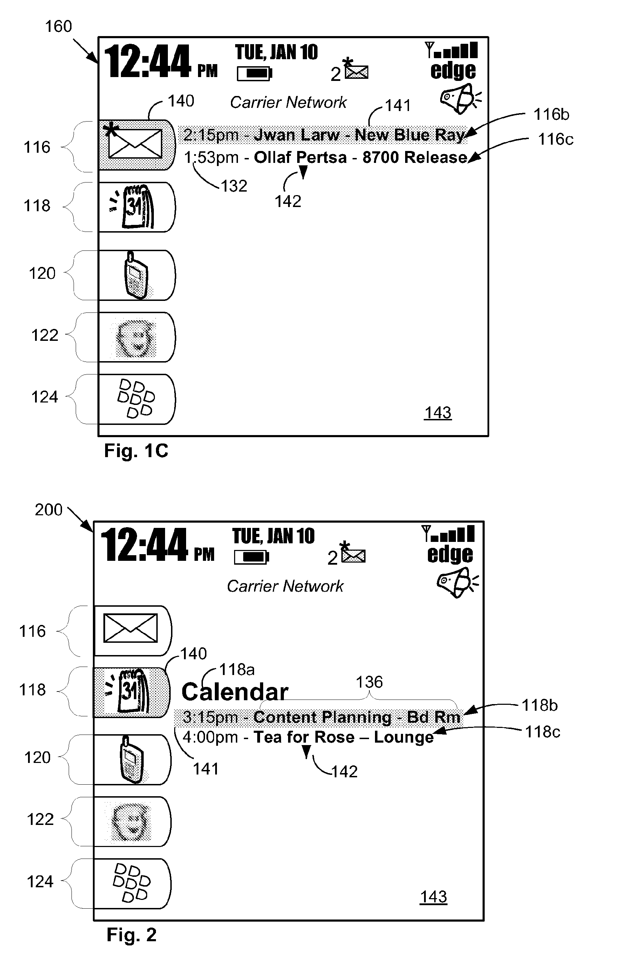

As further illustrated in Figures 1A-1C, 2 and 3, associated with each application icon is an application name (e.g. Messages 116a; Calendar 118a; Call Log 120a are associated with application icons 116, 118, and 120 respectively). As will be apparent, the order of icons 116-120 may be varied and other, additional or fewer applications may be displayed on the home screen 104. In addition, a user may be required to navigate or scroll through all of the icons displayed on the home screen to view additional application icons. In addition, persons of ordinary skill in the art will appreciate that the icons and names displayed on the home screen 104 in Figures 1-3 are exemplary and other graphics and names may be used.

In the present embodiment, a user may navigate a focus (e.g. 140 of Fig. 1A, 1 B, 1 C) about the application icons in the home screen using a pointing or other device (e.g. a thumb wheel, trackball, mouse, touch screen device) or keys to highlight and select a particular icon for action as is well known. According to the present embodiment, once an icon is selected (e.g. 140), the corresponding application or function name is displayed on the home screen 104. As well, for each applicable application, one or more communication events or organizational events corresponding to the selected icon are displayed.

As will be apparent, the timing for displaying the application name and corresponding application events may be varied such that the application name and corresponding events are displayed at substantially the same time upon selecting and/or focusing and/or scrolling (e.g. 140) onto the icon. Preferably, the application event is displayed (e.g. by fading in) within a time delay after displaying (or fading in and out) the application name. Further, as shown in view 160 of Figure 1C, the application event(s) corresponding to the selected icon may be displayed a predetermined amount of time after the application name has faded out.

For example, Figure 1A illustrates the selection of the messages application icon 116 via selection 140. Once the icon 116 is selected, the messages name 116a is displayed or faded in on the home screen 104. As shown in view 150 of Figure 1B, the message events 116b, 116c are subsequently displayed (e.g. following a short time delay) on the home screen 104. As will be apparent to a person skilled in the art, the message events, 116b, 116c may be displayed instantaneously along with the messages name 116a upon selection 140. Alternatively, as shown in Figure 1C, the messages name 116a is faded out after a period of display (Figure 1A) and the message events 116b, 116c are subsequently displayed on the home screen 104.

By time delaying the display of the event data, unnecessary changes to the home screen can be avoided. If event data is displayed immediately upon icon selection and the home screen updated each time a user scrolls over one or more icons to reach a desired icon, the intervening updates responsive to the brief selection of the undesired icons results in distracting operation of the device and an unpleasing home screen.

Further, once the user scrolls to or selects another application icon (e.g. selection 140 of calendar icon 118 in Figure 2) then only the application name (e.g. Calendar 118a) and events (e.g. calendar events 118b, 118c) corresponding to the newly selected icon 118 are displayed and the previously selected icon's (e.g. 116) name and/or application events (116b, 116c) are no longer displayed as shown in view 200. For example, the application name and/or application events fade in when a corresponding first application icon is selected but once the focus or navigation moves to a second application icon, then the application name and/or application events for the first selected icon fade out and the second application icon's event information is shown on the home screen 104. As well, after a predetermined amount of time where the user remains focused on the first application icon (e.g. 116) but no further user action is detected, the message events 116b, 116c may fade out even if the user does not move the focus away from icon 116. In this case, the message application events 116b, 116c may only continue to be displayed, if a user is interacting with (e.g. scrolling through, selecting, or focusing on) one or more of the message application events 116b, 116c. In this way the home screen is kept tidy and event data, which may be confidential or private, is not left on the home screen for others to see.

Although the above embodiments discussed in reference to Figures 1A-1C, 2 and 3, discuss that the application name corresponding to the application icon can fade in/out after focusing thereon, it will be understood that the application name could be permanently displayed on the home screen (e.g. in a transparent manner or otherwise that allows the background 143 to remain visible to the user). In this case, by focusing on a particular application icon, the corresponding application event information will appear on the home screen 104 either instantaneously or preferably after a predetermined period of time where the user remains focused on the icon.

Further, as will be appreciated by a person of ordinary skill in the art, the background image 143 may cover the entire home screen 104 (even under banner portion 102) such that the application icons are overlaid on top of the background 143. Alternatively, the background image 143 may cover the majority of the home screen 104 other than portion where the application icons are displayed (e.g. background 143a shown by dashed lines in view 150). In either case, the application icons are arranged in such a way as to allow the majority of the background 143, 143a to remain visible and unobstructed. Preferably the icons are arranged to be aligned with one (or more) background edges (e.g. 144a and 144b of background 143). The background edges are preferably side edges but top and or bottom edges may also be used.

In the exemplary Figures 1A-1C, 2 and 3, it is apparent that by scrolling to/ focusing on an application icon, the icon is changed by highlighting, shadowing or the like (e.g. selection 140). As will be apparent (but not shown), the icon may also be visually modified to indicate that it has been selected/focused on. Further, an audible feedback (e.g. "click") may also be presented to the user to indicate selection/scrolling through/focusing on the icon.

According to one embodiment, the application icons 116, 118, 120, 122 displayed on the home screen 104 may be visually modified to include a new event indicator which indicates that the corresponding application has a new event pending review by the user. For example, the messages application icon 116 includes a new messages indicator 116d to indicate that a new email message is present on the device. A new message can be defined as a message that is recently received by the device but not yet viewed by the user of the device. In the present embodiment, at least some of the application icons displayed on the home screen 104 may have an event counter which displays the count of events associated with the respective application. For example, view 100 and 150 show the email messages application having a new message counter 116e displayed on the home screen 104 (e.g. showing two new messages) along with the messages name 116a. Alternatively, an unread messages counter may be presented.

Referring now to Figures 1C and 2, once the application events are displayed upon user selection 140, preferably the home screen is configured with an event user interface so that the user can navigate to the application events (e.g. by using a keyboard, mouse, trackwheel, trackball, or touch screen) to highlight a particular application event element (e.g. event selection 141) for further action as will be described. For example, as shown in Fig. 2, upon scrolling to the calendar icon 118, the calendar events 118b, 118c which depict upcoming appointments/meetings for the user, are displayed on view 200. The user may then navigate to the right to scroll onto the list of calendar events displayed, thereby highlighting a particular calendar event element (e.g. 141). Navigation assists e.g. 142 of Figure 1C and Figure 2, may be displayed on the home screen 104 to indicate that additional list elements are available for display upon navigation by the user. When the focus is brought to an individual event, a specific action for the event (e.g. "open") or a context sensitive action may be invoked.

For example, in Figure 1C, the focus highlights the selection 141 of the message event 116b such that the highlighted message 116b may be opened directly for viewing and further action. Upon returning to the home screen 104 after invoking the message application 116 or after invoking each of the message events 116b, 116c directly, then no "new" email(s) remain so the count 116e of such is no longer displayed and the individual new message events are no longer shown when the user scrolls to the message application icon 116. Similarly, in Figure 2, the focus highlights 141 the calendar event 118b showing "Content Planning-Bd Rm" and this event may be invoked to view the calendar event in detail or allow further action as will be apparent. As will be appreciated, after selection 141 is made, the user may have the option to invoke the corresponding application at the selected event or the user may be able to view and edit details regarding the selected event within the home screen display 104 without launching the corresponding application.

As will be noted from Figures 1A-1C, 2 and 3, the application events configured for display on the home screen depict voice and/or data events and current or upcoming calendar appointments which are displayed upon user navigation or selection 140. This allows a user to get a quick view of application data without launching the corresponding application. In this manner, the user can continue to scroll through the application icons to get a snapshot of the user's activities specially for a current day and only navigate onto the desired application events for further information and action if desired. In addition, by providing application event information only on user request (e.g. scrolling the focus), the wallpaper portion 143 can continue to be displayed during user navigation of the application icons. Thus, the home screen user interface minimizes clutter and allows a user to more easily focus on important information. Further, the process of automatically fading in/out the application information such as name and associated event data, reduces the amount of user input needed to facilitate more accurate and efficient control of the device.

Preferably, the individual events (e.g. 116b, 116c) are displayed in accordance with a time of occurrence associated with the event. For example, referring to Figure 2, as calendar events become current, they are removed from the calendar event list once completed. As will be apparent, these time organization-related events may be retained within their associated application data store for maintaining a history of such events. Event data for organizational applications like a calendar application, an alarm function, and even a task list function of things to do that may not be time dependent may be displayed.

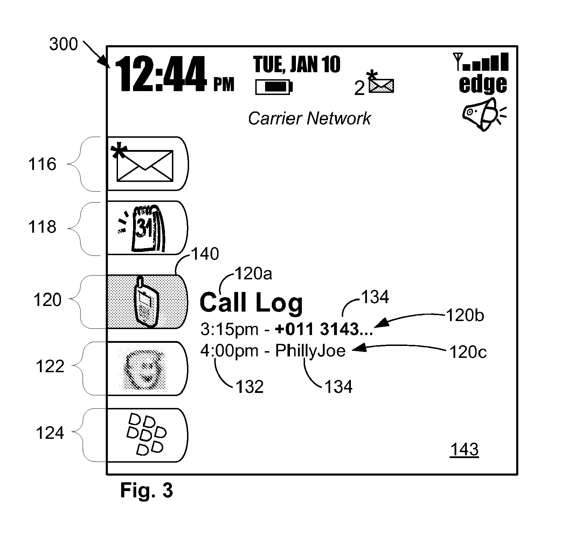

Referring to the event information shown in Figures 1 B, 1C, 2 and 3, each application related event information preferably includes a time of occurrence 132 and respective event information. Referring to Figure 3, phone event information 120b, 120c includes caller number 134 or if an address book application is present or caller ID information transmitted, a substituted contact name or caller ID for the caller. If either information is too long to fit on a line of the display, it may be truncated "..." (as shown in view 300).

Event data may be arranged (e.g. sorted) to display individual events according to their respective time of occurrence. It may be preferred to display calendar event data from the current time going forward in time while message (e.g. email) event data may be displayed from the current time going backward in time.

Opening a call event (e.g. 120b) upon selection of the event may bring up a call log interface or dial the caller as applicable. Referring to Figure 2, calendar event information includes a meeting subject and optional location information 136. If the event is scheduled on the current day, the time will be shown using the localized (e.g. customized) time format. If the event is scheduled beyond the current day, the date will be shown using a localized MM/DD format. This time display format may also apply to communication events.

The phone application preferably supports a representation of new missed call status. Different icon and text representations maybe provided when there are new missed calls. For example, the Call Log name 120a could be displayed as "Missed Calls (2)". As described above regarding the message application icon 116, the phone application icon 120 preferably also supports the use of a new indicator that will show when there are new missed calls or when there is a new voicemail present on the user's device. Event data may include missed calls, calls received, calls made, voicemail, etc.

The IM messenger application depicted by the messenger icon 122 preferably supports the representation of recent conversations and/or unread messages for the user of the device. Event data may also comprise new M contact invitations and presence related messages from IM contacts, etc. It will be appreciated that one or more icons for data communication applications may be provided for MMS/SMS messages. Other data communication applications, particularly those that receive communications passively in the background without user action, for example, applications operating in accordance with Wireless Application Push (WAP) protocols or other applications may also be configured to provide event data of new or recent events for display on the home screen as described.

As described above, when an event application is selected, event data, if available, is displayed on a portion of the home screen 104. The display depicts a truncated or otherwise summarized form (e.g. as shown in view 300) to provide a quick view display. The home screen may be configured to provide an event user interface to allow a user to navigate to the summarized view and select any of the individual events displayed on the portion of the home screen 104 (e.g. individual message events 116b, 116c; individual calendar events 118b, 118c; and individual phone events 120b, 120c). In response to a selection, the event user interface may be configured to display a detailed view for the selected event. For example, phone log event 120b shown in view 300 is truncated. By selecting the phone log event 120b, a more detailed and untruncated version of the event information 120b may be displayed (not shown). If there is insufficient display space on the home screen 104 to display the detailed view of the event information, the detailed view may be shown in a scrolling format as will be appreciated by a person of ordinary skill in the art. The detailed view may be automatically displayed after a predetermined period of time that an individual event remains selected. The detailed view may be removed (e.g. by fading out) after a predetermined period where the focus remains idle, or on command from the user (e.g. cancel or escape input) or moving the focus off the detailed view, etc.

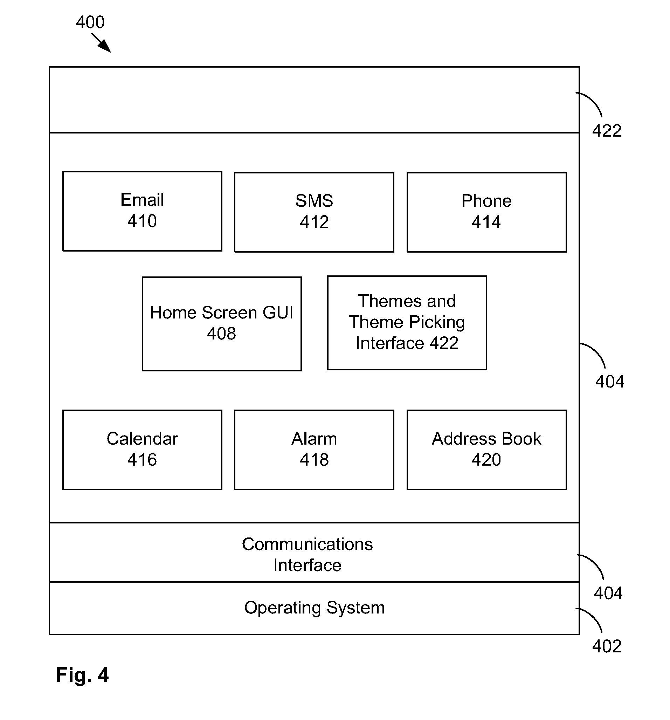

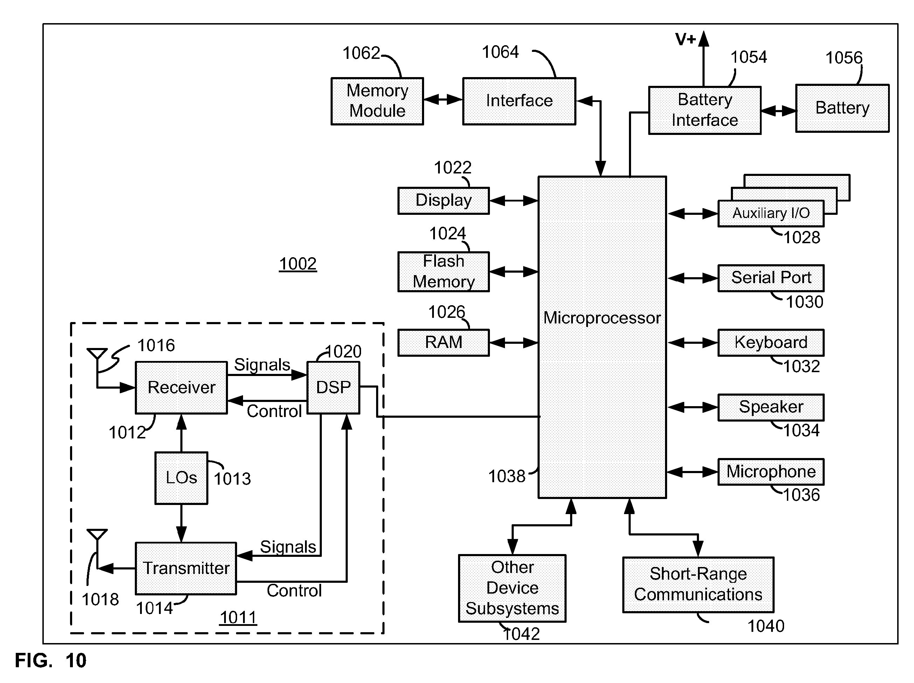

Figure 4 is a block diagram of a computer programmable medium such as a memory component 400 of an electronic device (e.g. device 1002 of Figure 10) illustrating example software components in accordance with an embodiment. Memory 400 stores instructions and data comprising an operating system 402, communications interface 404, applications 406 and other components 422. Applications may comprise various data and/or voice communications applications such as email application 410, SMS application 412 and phone application 414. Time-oriented organizational applications include calendar application 416 and alarm application 418. Other information organizational applications include address book 420. Persons of ordinary skill in the art will appreciate that the various applications 406, OS 402 and other components 422 may cooperate with one another and that bright line distinctions between applications may be artificial for purposes of illustration. Coordination may be achieved through a management application providing an integrated GUI such as a personal information manager (PIM) message list interface. Interface 408 operates to present the various views 100, 150, 160, 200, and 300 as described. Themes and theme picking interface 422 enables the display of the various user interfaces for the individual applications (e.g. 410, 412, 414, 416, 418, 420) and the home screen GUI 408 in accordance with defined themes.

Other components 422 (not individually illustrated) may comprise a calculator, a web browser, media applications (e.g. camera, picture viewer, etc.), games, data synchronization, various user-profile functions and options, etc. Interface 408 may also be configured to work with these other components 422. Though not shown, various applications are coupled to persistent stores for persisting data such as messages, calendar items, pictures, etc. as applicable.

Preferably, home screen GUI 408 comprises an application skinning implementation utilizing scalable vector graphics (SVG). SVG is a language for describing two-dimensional graphics and graphical applications in XML, the extensible markup language. It has two parts: an XML-based file format and a programming API for graphical applications. Key features include shapes, text and embedded raster graphics, with many different painting styles. It supports scripting through languages such as ECMAScript and has comprehensive support for animation. A rich set of event handlers such as onmouseover and onclick can be assigned to any SVG graphical object. Additional information is available at http://www.w3.org/Graphics/SVG/. A goal of skinning is to separate the presentation (GUI) of the application from the business logic (functionality) and allow the GUI to be defined through an external file (SVG XML) that can be created and "late bound" to application code. In particular, the themes (422) may be defined in accordance with SVG.

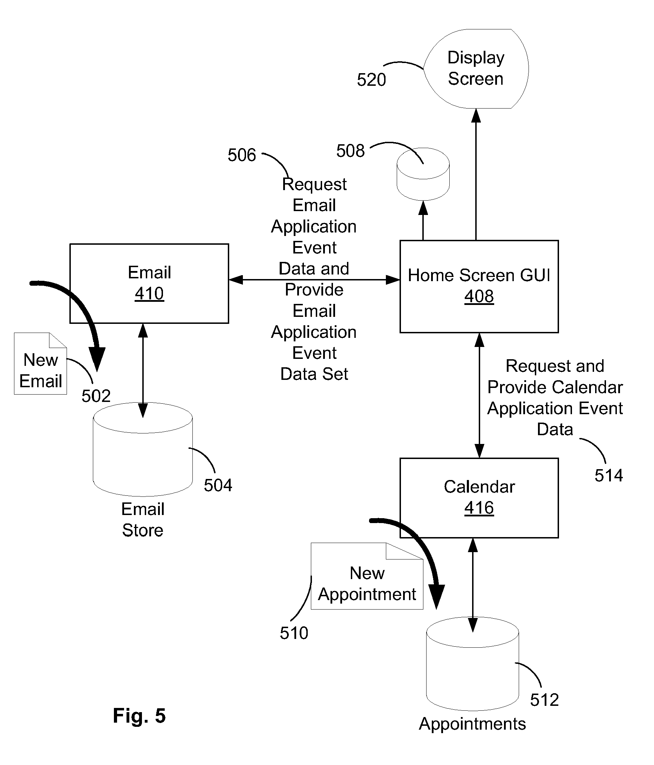

Figure 5 is a block diagram showing an example interaction between selected software components of Figure 4 in accordance with an embodiment. In the illustrated embodiment, message applications such as email application 410 persist email data and provide a set of new email data 506 to home screen GUI 408 upon receiving a user request for new email data. For example, as described earlier, the home screen GUI 408 may provide a request for new email data once the user navigates to or focuses on message application icon 116 associated with email application 410. Further, email application 410 may prompt GUI 408 to pull the data set 506 when new email 502 arrives for storage into GUI store 508 such that the new email data may be accessed by the GUI 408 upon receiving a subsequent user request for the information. The email data set 506 may include information summarizing the new mail events for display as an event for the messages events (e.g. 116b, 116c) of the home screen 104. GUI 408 may review the set 506 and determine which of the events (e.g. new email) to display on display screen 520 and how to display it in accordance with the configuration of the theme. Typically 1-n of the most current new emails are shown as message events (similar to 116b, 116c). Home screen GUI 608 may determine which email among the new email are the most current and the number of them to show via display 520 (e.g. view 150 and 160 show only 2 messages).

Similarly organizational event applications such as calendar application 416 persist appointment events 510 and provide calendar event data 514 including information summarizing the event for display as shown in view 200 by home screen GUI 408. In the case where a user remains focused on an application icon for some time (or is scrolling through new application event information), then a protocol may be defined to exchange data and data operations between the primary event applications (e.g. 410 and 416) and GUI 408 so that, among other operations, new events may be added and expired events deleted from the list of application events shown (e.g. 116b, 116c). Alternatively, the applications (410, 416 and/or 408) may provide APIs to obtain/receive the required data to define the event of the respective event list. A person of ordinary skill in the art will recognize how to program such an interface.

By way of example, with reference to Figure 5, a new email 502 is received via email application 410 and persisted to email store 504. Once the email application receives a request for new email data (which may be triggered by a user navigating to or focusing on the email application icon 116), then the email application 410 provides sufficient data 506 to GUI 408, including summary information to add a message event for display to display screen 520 (e.g. 116b, 116c). GUI 408 may persist this data to its store 508 and/or maintain same in memory 402. Should a user wish to work with the associated email (e.g. open, reply, delete, forward etc.) from GUI 408, GUI 408 is configured to invoke the email application 410 to facilitate such interaction (not shown). GUI 408 and email application 502 may distinguish between new messages and unread messages. As described earlier, a message may be considered new if it is received since the last time the email application's interface was invoked to present a list of messages for review by the user. New email may be deemed not new upon such an event (invoking the email application's interface) on the assumption that the user looks at the summary information for the new emails. Unread emails are those that remain unopened or were opened but marked as unopened. Thus distinguishing new and unread enables further refinements in currency. GUI 408 may be configured to show a count of new or unread email (e.g. 116e in view 100, 150).

As well, Figure 5 shows a new appointment 510 received via calendar application 416 and persisted to store 512. New appointment 510 may be defined via a user interface of application 416 or received via a data message (e.g. like an email) invitation or as a result of synchronization between application 616 and a remote associated calendar application (not shown). For example, associated calendar applications may reside respectively on an enterprise computer and a portable device (PDA). Upon receiving a request for data from GUI 408 (initiated by a user scrolling to or focusing on the calendar application icon), then the calendar application 416 provides sufficient data 514 to GUI 408, including summary information, to add the appointment event to the list for display (e.g. 118b, 118c). Again this data 514 may be persisted as necessary to store 508 or stored in memory 402. Alternatively, the Calendar application 416 may be configured to prompt the GUI 408 to pull the appointment data 512 when a new appointment 510 is received. In this case, the new appointment data 510 may be stored within GUI store 508 for later access by the GUI 408 upon user navigation or selection of corresponding calendar application icon 118. GUI 408 may be configured to invoke a calendar interface to open a specific appointment to facilitate working with the appointment (not shown). Similar activities (i.e. data exchanges between application 512 and home screen GUI 408) may occur for updated or deleted appointments. Appointments are also removed from display on the home screen once completed. A data exchange may be triggered in response to event completion.

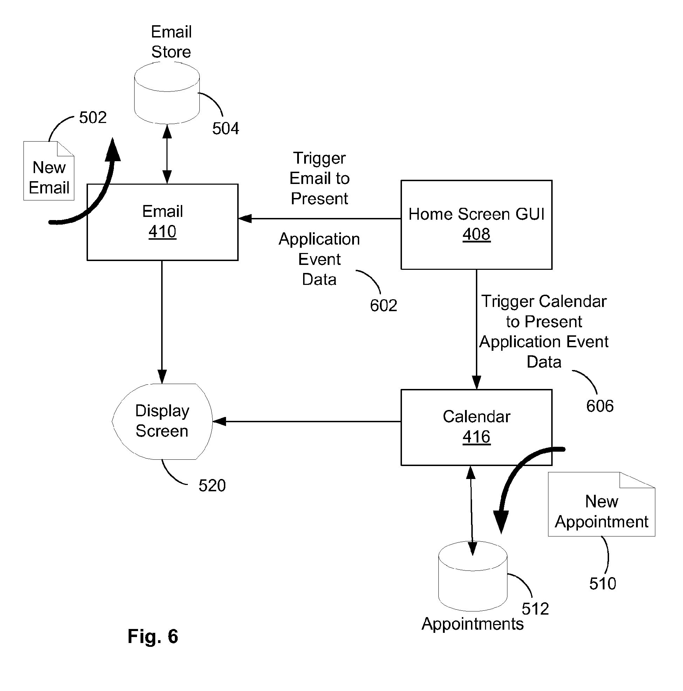

Referring now to Figure 6, shown is an alternate embodiment where the home screen GUI 408 provides a trigger to the primary event applications (e.g. 410, 416) for triggering the display of new application event data on the home screen 104 via the display screen 520. For example, the home screen GUI 408 may provide a trigger to the email application to show email application event data 602 (or a preview thereof) based on the user navigating to or focusing on or selecting the message application icon 116.

As will be apparent, the storage and retrieval of new emails 502/ new appointments 510 with respect to email store 504 and appointments store 512 respectively are performed similar to the embodiment discussed in reference to Figure 5.

Referring again to Figure 6, upon receiving the email trigger 602, the email application will retrieve the new email 502 from the email store 504 and configure it for subsequent display on the display screen 520 (e.g. message application event 116b, 116c). Thus, the email application 410 may communicate with the home screen GUI 408 to determine when the new email data 502 should be displayed (e.g. instantaneously upon selecting icon 116, the new email data 502 is displayed simultaneously as the messages name 116a as shown in Figure 1 B).

Similarly, the home screen GUI 408 may provide a trigger to the calendar application to show calendar application event data 606 (or a preview thereof). Upon receiving the trigger 606, the calendar application configures the new appointment data 510 for display on the display screen 520. As discussed earlier, the applications 410, 416 may provide APIs to obtain/receive data to define how the new event should be presented on the home screen 104 via display screen 520.

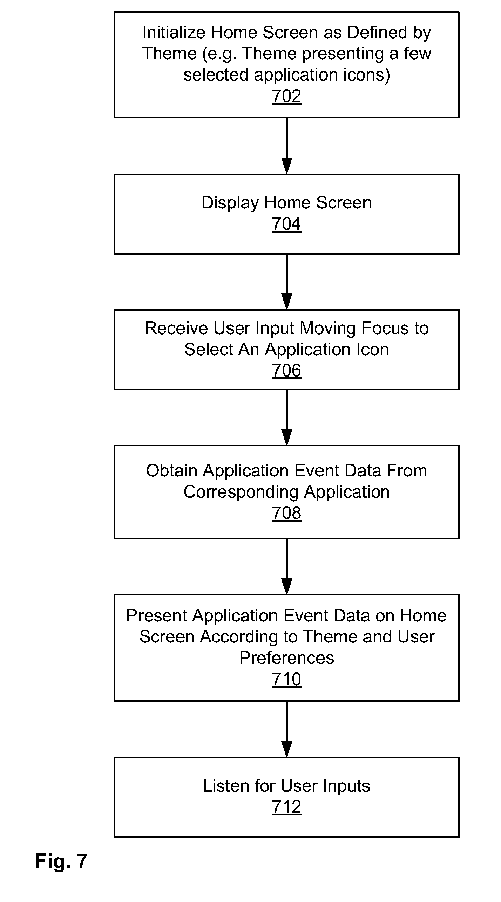

Figures 7-9 are flowcharts of operations 700, 800, and 900 in accordance with two alternate embodiments, for home screen GUI and/or applications presenting application event information on the home screen display 104. Referring to Figure 7, shown is a process 700 for the home screen GUI to request application data (event data) for subsequent display on the display screen 520.

At step 702, the home screen is initialized as defined by the theme requirements. For example, as described above, the home screen may be configured to display only a predetermined number of application icons as chosen by a theme developer or, if an option of the theme, a user. A developer (or user) may choose to have displayed on the home screen one or more of those application icons for which application event data can be seen (e.g. communication and/or organizational applications as described above which are typically frequently used by users). At step 704, the home screen is presented via the device's display screen. At step 706, user input is received indicating the user has scrolled/moved the focus to select an application icon. At step 708, the home screen GUI sends a request for and obtains application event data from the corresponding application. At step 710, the application event data is presented on the home screen according to theme and user preferences. For example, the theme and user preferences which define the application event data presented and the format thereof may include determining which email events to display, truncating long data strings, new vs. unread counts, date format of the event data, visual modification of icons etc. At step 712, the home screen GUI listens for new user inputs/navigations.

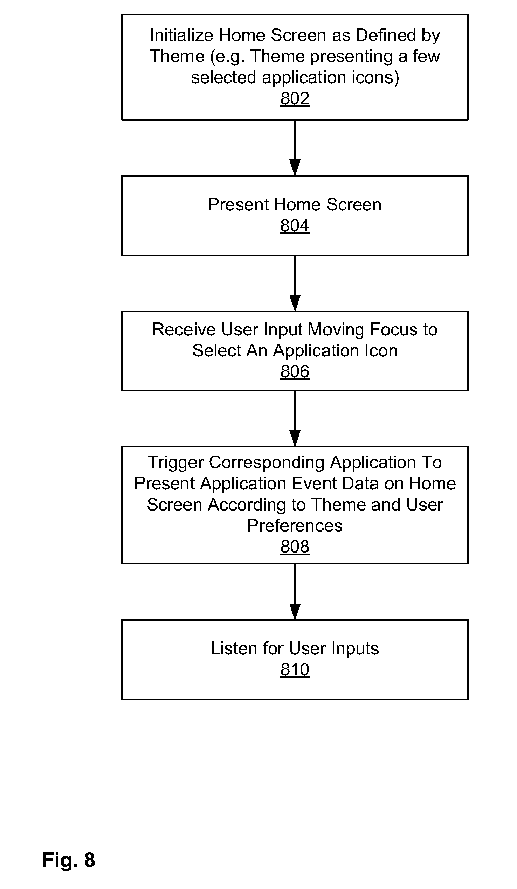

Referring to Figure 8, shown is a process 800 for requesting a selected application to process and display the new event information. At step 802, the home screen is initialized as defined by the theme. At step 804, the home screen is displayed. At step 806, the home screen GUI receives notification of user input (e.g. user moves focus to select an application icon). At step 808, the home screen GUI triggers the corresponding application (e.g. corresponding to the selected application icon) to present application event data on the home screen according to theme and user preferences. At step 810, the home screen GUI listens for further user inputs.

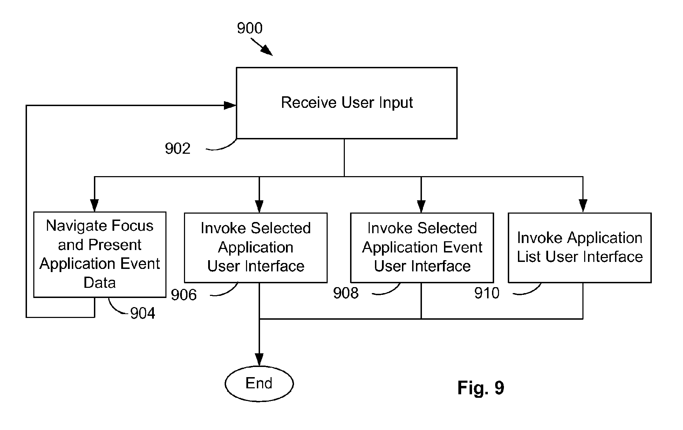

In conjunction with data updates from the applications, the home screen is responsive to user input and simplified user input operations 900 are shown in Figure 9. In response to user input received (step 902), various operations may be occasioned. The focus may be moved about the home screen to select an application icon and the application event data is presented accordingly (step 904). An application icon (e.g. selection 140) may be in focus and the selected application's user interface invoked (step 906) or an event item from an application may be in focus (e.g. selection 141) and the associated interface invoked (step 908) for the item (e.g. open specific message or appointment). The menu icon function 124 may be in focus and the application list interface invoked (step 910).

Figure 10 is a detailed block diagram of a preferred handheld device 1002 adapted in accordance with an embodiment that may be used as an electronic device having message and organization system functions and a home screen GUI as described. Handheld device 1002 is preferably a two-way communication device having at least voice and advanced data communication capabilities, including the capability to communicate with other computer systems. Depending on the functionality provided by handheld device 1002, it may be referred to as a data messaging device, a two-way pager, a cellular telephone with data messaging capabilities, a wireless Internet appliance, or a data communication device (with or without telephony capabilities). Handheld device 1002 may communicate with any one of a plurality of base station transceiver systems (not shown) within its geographic coverage area.

Handheld device 1002 will normally incorporate a communication subsystem 1011, which includes a receiver 1012, a transmitter 1014, and associated components, such as one or more (preferably embedded or internal) antenna elements 1016 and 1018, local oscillators (LOs) 1013, and a processing module such as a digital signal processor (DSP) 1020. As will be apparent to those skilled in field of communications, particular design of communication subsystem 1011 depends on the communication network in which handheld device 1002 is intended to operate.

Handheld device 1002 may send and receive communication signals over the network after required network registration or activation procedures have been completed. Signals received by antenna 1016 through the network are input to receiver 1012, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 1020. In a similar manner, signals to be transmitted are processed, including modulation and encoding, for example, by DSP 1020. These DSP-processed signals are input to transmitter 1014 for digital-to-analog (D/A) conversion, frequency up conversion, filtering, amplification and transmission over communication network via antenna 1018. DSP 1020 not only processes communication signals, but also provides for receiver and transmitter control. For example, the gains applied to communication signals in receiver 1012 and transmitter 1014 may be adaptively controlled through automatic gain control algorithms implemented in DSP 1020.

Network access is associated with a subscriber or user of handheld device 1002, and therefore handheld device 1002 comprises a memory module 1062, memory module card or a Removable User Identity Module (R-UIM), to be inserted in or connected to an interface 1064 in order to operate in the network. Alternatively, memory module 1062 may be a non-volatile memory that is programmed with configuration data by a service provider so that mobile station 1002 may operate in the network. Since handheld device 1002 is a mobile battery-powered device, it also includes a battery interface 1054 for receiving one or more rechargeable batteries 1056. Such a battery 1056 provides electrical power to most if not all electrical circuitry in handheld device 1002, and battery interface 1054 provides for a mechanical and electrical connection for it. The battery interface 1054 is coupled to a regulator that provides power V+ to all of the circuitry.

Handheld device 1002 includes a microprocessor 1038 that controls overall operation of mobile station 1002. Communication functions, including at least data and voice communications, are performed through communication subsystem 1011. Microprocessor 1038 also interacts with additional device subsystems such as a display 1022, a flash memory 1024, a random access memory (RAM) 1026, auxiliary input/output (I/O) subsystems 1028, a serial port 1030, a keyboard 1032, a speaker 1034, a microphone 1036, a short-range communications subsystem 1040, and any other device subsystems generally designated at 1042. Some of the subsystems shown in Figure 5 perform communication-related functions, whereas other subsystems may provide "resident" or on-device functions. Notably, some subsystems, such as keyboard 1032 and display 1022, for example, may be used for both communication-related functions, such as entering a text message for transmission over a communication network, and device-resident functions such as a calculator or task list. Operating system software used by microprocessor 1038 is preferably stored in a persistent store such as flash memory 1024, which may alternatively be a read-only memory (ROM) or similar storage element (not shown). Those skilled in the art will appreciate that the operating system, specific device applications, or parts thereof, may be temporarily loaded into a volatile store such as RAM 1026.

Microprocessor 1038, in addition to its operating system functions, preferably enables execution of software applications on handheld device 1002. A predetermined set of applications that control basic device operations, including at least data and voice communication applications, will normally be installed on handheld device 1002 during its manufacture. A preferred application that may be loaded onto handheld device 1002 may be a personal information manager (PIM) application having the ability to organize and manage data items relating to a user such as, but not limited to, e-mail, calendar events, voice mails, appointments, and task items. Naturally, one or more memory stores are available on handheld device 1002 and memory module 1062 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on handheld device 1002 with respect to such items. This is especially advantageous where the host computer system is the mobile station user's office or enterprise computer system. Additional applications may also be loaded onto handheld device 1002 through network, an auxiliary I/O subsystem 1028, serial port 1030, short-range communications subsystem 1040, or any other suitable subsystem 1042, and installed by a user in RAM 1026 or preferably a non-volatile store (not shown) for execution by microprocessor 1038. Such flexibility in application installation increases the functionality of handheld device 1002 and may provide enhanced on-device functions, communication-related functions, or both. For example, secure communication applications may enable electronic commerce functions and other such financial transactions to be performed using handheld device 1002.

In a data communication mode, a received signal such as a text message, an e-mail message, or web page download will be processed by communication subsystem 1011 and input to microprocessor 1038. Microprocessor 1038 will preferably further process the signal for output to display 1022 or alternatively to auxiliary I/O device 1028. A user of handheld device 1002 may also compose data items, such as e-mail messages, for example, using keyboard 1032 in conjunction with display 1022 and possibly auxiliary I/O device 1028. Keyboard 1032 is preferably a complete alphanumeric keyboard and/or telephone-type keypad. These composed items may be transmitted over a communication network through communication subsystem 1011.

For voice communications, the overall operation of handheld device 1002 is substantially similar, except that the received signals would be output to speaker 1034 and signals for transmission would be generated by microphone 1036. Alternative voice or audio I/O subsystems, such as a voice message recording subsystem, may also be implemented. Although voice or audio signal output is preferably accomplished primarily through speaker 1034, display 1022 may also be used to provide an indication of the identity of a calling party, duration of a voice call, or other voice call related information, as some examples.

Serial port 1030 in Figure 10 is normally implemented in a personal digital assistant (PDA)-type communication device for which synchronization with a user's desktop computer as a desirable, albeit optional, component. Serial port 1030 enables a user to set preferences through an external device or software application and extends the capabilities of handheld device 1002 by providing for information or software downloads to handheld device 1002 other than through a wireless communication network. The alternate download path may, for example, be used to load an encryption key onto handheld device 1002 through a direct and thus reliable and trusted connection to thereby provide secure device communication.

Short-range communications subsystem 1040 is an additional optional component that provides for communication between handheld device 1002 and different systems or devices, which need not necessarily be similar devices. For example, subsystem 1040 may include an infrared device and associated circuits and components, or a Bluetooth^{™} communication module to provide for communication with similarly enabled systems and devices. Bluetooth^{™} is a registered trademark of Bluetooth SIG, Inc.

Handheld device 1002 may be configured such as via software (instructions and data) to provide the home screen integrated presentation of information in a GUI as described above.

Although embodiments of the invention have been described herein, it will be understood by those skilled in the art that variations may be made thereto without departing from the spirit of the invention or the scope of the appended claims.

## Claims

1. In a computing device having applications for managing respective events, a method for previewing event data on a home screen user interface comprising:
displaying a home screen comprising a background and a predetermined number of application icons arranged on the home screen to enable viewing of a majority of the background, at least some of said application icons for invoking respective user interfaces for event applications which manage corresponding events selected from data communication, voice communication and calendar events; and
in response to a user selecting a first application icon corresponding to a first event application, displaying event data maintained by the first event application on a portion of the home screen.

2. The method of claim 1 further comprising:
removing the display of the event data maintained by the first event application in response to one of:
the user selecting a second application icon; and
following a predetermined time period after the selection of the first application icon.

3. The method of claim 1, wherein the event data comprises at least one individual event, and the method further comprises:
providing an event user interface to the user for selecting the individual event and invoking the event application user interface for the individual event.

4. The method of any one of claims 1 or 2, wherein the step of displaying event data comprises displaying a summarized view of at least one individual event, and the method further comprises:
providing an event user interface to the user for selecting the individual event; and
displaying on the home screen a detailed view of the individual event in response to the user selecting the individual event.

5. The method of any one of claims 1 to 4 comprising performing said steps of displaying the home screen and event data in accordance with a theme defined for the home screen user interface.

6. The method of claim 5 comprising determining the event data to display in accordance with at least one of the theme and user preferences.

7. The method of claim 1 comprising displaying a corresponding application name on a portion of the home screen in response to the user selecting the application icon.

8. The method of any one of claims 1 to 7, wherein the user selecting the first application icon comprises navigating a focus about the home screen to the first application icon.

9. The method of any one of claims 1 to 8, wherein the step of displaying event data comprises fading in the event data.

10. The method of claim 2, wherein the step of removing the display of the event data comprises fading out the event data.

11. The method of any one of claims 1 to 10 wherein the step of displaying event data comprises modifying the display of the event data to include a new event in response to an update maintained by the first event application.

12. The method of any one of claims 1 to 11 wherein the event data is selected from the group comprising: email data; SMS data; MMS data; call log data; instant messenger data; and appointment data.

13. A communication device having a memory for storing applications for managing respective events, the communication device comprising:
a communication interface for communicating data and voice communications; and
a graphical user interface (GUI) to control the communication device, said GUI configured to:
display a home screen comprising a background and a predetermined number of application icons arranged on the home screen to enable viewing of a majority of the background, at least some of said application icons for invoking respective user interfaces for event applications which manage corresponding events selected from data communication, voice communication and calendar events; and
in response to a user selecting a first application icon corresponding to a first event application, display event data maintained by the first event application on a portion of the home screen.

14. The device of claim 13, wherein the GUI is further configured to:
remove the display of the event data maintained by the first event application in response to one of:
the user selecting a second application icon; and the user selecting a second application icon; and
following a predetermined time period after the selection of the first application icon.

15. The device of claim 13, wherein the event data comprises at least one individual event, and the GUI is further configured to:
provide an event user interface allowing the user to select the individual event and invoke the event application user interface for the individual event.

16. The device of any one of claims 13 or 14, wherein the GUI is configured to display the event in a summarized view of at least one individual event and to provide an event user interface configured to allow the user to select the individual event to invoke a display a detailed view of the individual event on the home screen.

17. The device of any one of claims 13 to 16, wherein the GUI comprises at least one theme for the home screen user interface and the GUI is configured to display the home screen and event data in accordance with a one of the at least one theme.

18. The device of claim 17, wherein the GUI is configured to determine the event data to display in accordance with at least one of the theme and user preferences.

19. The device of claim 13, wherein the GUI is configured to display a corresponding application name on a portion of the home screen in response to the user selecting the application icon.

20. The device of any one of claims 13 to 19, wherein GUI is configured to allow a user to navigate a focus about the home screen to the first application icon.

21. The device of any one of claims 13 to 20, wherein the GUI is configured to display event data by fading in the event data.

22. The device of claim 14, wherein the GUI is configured to remove the display event data by fading out the event data.

23. The device of any one of claims 13 to 22, wherein the GUI is further configured to display the event data by modifying the display of the event data to include a new event in response to an update maintained by the first event application.

24. The device of any one of claims 13 to 23 wherein the event data displayed is selected from the group comprising: email data; SMS data; MMS data; call log data; instant messenger data; and appointment data.

25. A computer program product having computer readable code embodied therein, for execution by a processor of a communication device to provide a home screen user interface, the code configuring the communication device to:
display a home screen comprising a background and a predetermined number of application icons arranged on the home screen to enable viewing of a majority of the background, at least some of said application icons for invoking respective user interfaces for event applications which manage corresponding events selected from data communication, voice communication and calendar events; and
display event data maintained by a respective event application on a portion of the home screen in response to a user selecting an application icon corresponding to the respective event application.

## Amended claims

### Amended claims in accordance with Rule 137(2) EPC.

**1.** A method for previewing event data on a home screen (104) user interface in a computing device having applications (406) for managing respective events comprising:
displaying a home screen (104) comprising a background (143, 143a) and a predetermined number of application icons (116, 118, 120, 122) arranged in a single list being aligned with one or more background edges (144, 144a) on the home screen (104) to enable viewing of a majority of the background (143, 143a), at least some of said application icons (116, 118, 120, 122) for invoking respective user interfaces for event applications (406) which manage corresponding events selected from data communication, voice communication and calendar events; and
in response to a user selecting (140) a first application icon (116, 118, 120) corresponding to a first event application, displaying event data maintained by the first event application on a portion of the home screen (104).

**2.** The method of claim 1 further comprising:
removing the display of the event data maintained by the first event application following a predetermined time period after the selection (140) of the first application icon (116, 118, 120).

**3.** The method of claim 1, wherein the event data comprises at least one individual event, and the method further comprises:
providing an event user interface (408) to the user for selecting the individual event and invoking the event application user interface for the individual event.

**4.** The method of any one of claims 1 or 2, wherein the step of displaying event data comprises displaying a summarized view of at least one individual event, and the method further comprises:
providing an event user interface to the user for selecting the individual event; and
displaying on the home screen (104) a detailed view of the individual event in response to the user selecting the individual event.

**5.** The method of any one of claims 1 to 4 comprising performing said steps of displaying the home screen (104) and event data in accordance with a theme (422) defined for the home screen (104) user interface (408).

**6.** The method of claim 5 comprising determining the event data to display in accordance with at least one of the theme (422) and user preferences.

**7.** The method of claim 1 comprising displaying a corresponding application name on a portion of the home screen (104) in response to the user selecting (140) the application icon (116, 118, 120).

**8.** The method of any one of claims 1 to 7, wherein the user selecting (140) the first application icon (116, 118, 120) comprises navigating a focus about the home screen (104) to the first application icon (140).

**9.** The method of any one of claims 1 to 8, wherein the step of displaying event data comprises fading in the event data.

**10.** The method of claim 2, wherein the step of removing the display of the event data comprises fading out the event data.

**11.** The method of any one of claims 1 to 10 wherein the step of displaying event data comprises modifying the display of the event data to include a new event in response to an update maintained by the first event application.

**12.** The method of any one of claims 1 to 11 wherein the event data is selected from the group comprising: email data; SMS data; MMS data; call log data; instant messenger data; and appointment data.

**13.** A communication device having a memory for storing applications for managing respective events, the communication device comprising:
a communication interface for communicating data and voice communications; and
a graphical user interface (GUI) (408) to control the communication device, said GUI configured to:
display a home screen (104) comprising a background (143, 143a) and a predetermined number of application icons (116, 118, 120, 122) arranged in a single list being aligned with one or more background edges (144, 144a) on the home screen (104) to enable viewing of a majority of the background (143, 143a), at least some of said application icons (116, 118, 120, 122) for invoking respective user interfaces for event applications which manage corresponding events selected from data communication, voice communication and calendar events; and
in response to a user selecting (140) a first application icon (116, 118, 120) corresponding to a first event application, display event data maintained by the first event application on a portion of the home screen (104).

**14.** The device of claim 13, wherein the GUI is further configured to:
remove the display of the event data maintained by the first event application following a predetermined time period after the selection of the first application icon.

**15.** The device of claim 13, wherein the event data comprises at least one individual event, and the GUI is further configured to:
provide an event user interface allowing the user to select the individual event and invoke the event application user interface for the individual event.

**16.** The device of any one of claims 13 or 14, wherein the GUI is configured to display the event in a summarized view of at least one individual event and to provide an event user interface configured to allow the user to select the individual event to invoke a display a detailed view of the individual event on the home screen (104).

**17.** The device of any one of claims 13 to 16, wherein the GUI comprises at least one theme for the home screen (104) user interface and the GUI is configured to display the home screen (104) and event data in accordance with a one of the at least one theme (422).

**18.** The device of claim 17, wherein the GUI is configured to determine the event data to display in accordance with at least one of the theme (422) and user preferences.

**19.** The device of claim 13, wherein the GUI is configured to display a corresponding application name (116a, 118a, 120a) on a portion of the home screen (104) in response to the user selecting (140) the application icon (116, 118, 120).

**20.** The device of any one of claims 13 to 19, wherein GUI is configured to allow a user to navigate a focus about the home screen (104) to the first application icon (116, 118, 120).

**21.** The device of any one of claims 13 to 20, wherein the GUI is configured to display event data by fading in the event data.

**22.** The device of claim 14, wherein the GUI is configured to remove the display event data by fading out the event data.

**23.** The device of any one of claims 13 to 22, wherein the GUI is further configured to display the event data by modifying the display of the event data to include a new event in response to an update maintained by the first event application.

**24.** The device of any one of claims 13 to 23 wherein the event data displayed is selected from the group comprising: email data; SMS data; MMS data; call log data; instant messenger data; and appointment data.

**25.** A computer program product having computer readable code embodied therein, for execution by a processor of a communication device to provide a home screen (104) user interface, the code configuring the communication device to:
display a home screen (104) comprising a background (143, 143a) and a predetermined number of application icons (116, 118, 120, 122) arranged in a single list being aligned with one or more background edges (144, 144a) on the home screen (104) to enable viewing of a majority of the background (143, 143a), at least some of said application icons (116, 118, 120, 122) for invoking respective user interfaces for event applications which manage corresponding events selected from data communication, voice communication and calendar events; and
display event data maintained by a respective event application on a portion of the home screen (104) in response to a user selecting (140) an application icon (116, 118, 120) corresponding to the respective event application.
